# EUROPÄISCHE PATENTSCHRIFT

(11) **EP 1 003 977 B1**
(45) Veröffentlichungstag und Bekanntmachung des Hinweises auf die Patenterteilung: **25.06.2003**
(21) Anmeldenummer: 98936064.9
(22) Anmeldetag: 11.08.1998
(51) Int. Cl.: F16B 7/04

(54) **VERSCHLUSSHÜLSE FÜR EINE KLEMMVORRICHTUNG ZUM LÖSBAREN VERBINDEN ZWEIER PROFILSTÜCKE**
CLOSING BUSHING FOR A CLAMPING DEVICE USED FOR REMOVABLY CONNECTING TWO PROFILED PARTS
DOUILLE DE FERMETURE POUR UN DISPOSITIF DE SERRAGE UTILISE POUR ASSEMBLER DE FACON LIBERABLE DEUX PIECES PROFILEES

(30) Priorität: 12.08.1997 CH 190097
(43) Veröffentlichungstag der Anmeldung: 31.05.2000
(73) Patentinhaber: SYMA INTERCONTINENTAL AG, CH-9533 Kirchberg (CH)
(72) Erfinder: STRÄSSLE, Marcel, CH-9533 Kirchberg (CH); ZÜLLIG, Kurt, CH-9533 Kirchberg (CH)
(74) Vertreter: Liebetanz, Michael, Dipl.-Phys.
(86) Internationale Anmeldenummer: CH9800337
(87) Internationale Veröffentlichungsnummer: WO99009326

(56) Entgegenhaltungen:
- EP-A- 0 599 178
- WO-A-97/25536
- DE-A- 1 811 743
- DE-A- 2 610 200
- DE-A- 2 804 222

## Beschreibung

Die vorliegende Erfindung betrifft eine Vorrichtung zum lösbaren Verbinden zweier Profilstücke mit einer Klemmvorrichtung, die in eine in einem Profilstück vorgesehene Öffnung einführbar ist, mit einer Verschlusshülse, die zur formschlüssigen Aufnahme des Körpers der Klemmvorrichtung über eine Ausnehmung verfügt, und mit einem Bedienknopf, mit dem die Klemmvorrichtung in der Verschlusshülse arretierbar ist.

Eine solche Vorrichtung ist aus der DE 28 04 222 bekannt, in der ein Verbindungsbeschlag für Möbelteile beschrieben ist, mit der ein in einem Profilstück eingelassener Spannzapfen durch eine Verschlusshülse arretiert wird, wobei durch eine Drehung der Verschlusshülse eine Eingriffsspirale derselben in Ringnuten des Spannzapfens eingreift.

Eine weitere Vorrichtung zur lösbaren Verbindung von zwei oder mehr Holzteilen ist aus der DE 18 11 743 bekannt, bei der ein Metallzapfen als Zugstange über eine als Kurvenscheibe ausgestaltete Verschlusshülse lösbar in einem Profilstück arretiert wird.

Die genannten Vorrichtungen sind für einen vielmaligen Auf- und Abbau, wie er im Messebau notwendig ist, nicht geeignet.

Eine Klemmvorrichtung der oben genannten Art für den Messebau ist beispielsweise aus der WO 97/25536 der Anmelderin bekannt. Solche Klemmvorrichtungen sind dafür vorgesehen, zwei Profilstücke miteinander zu verbinden. Dabei handelt es sich zum einen üblicherweise um eine profilierte Stange, an welche ein Wandprofil angesetzt wird. In dem Wandprofil ist seitlich für jede Klemmvorrichtung eine innere Ausfräsung vorgesehen, in die die Klemmvorrichtung bis zu den überstehenden Hakenelementen eingeschoben werden kann. Auf der einen Seite der Wandoberfläche ist für eine aus der WO 97/25536 bekannten Klemmvorrichtung eine runde Bohrung vorgesehen, durch welche sich der Verriegelungskopf hindurcherstreckt, nachdem er gegen die Wirkung einer Federkraft in der Klemmvorrichtung versenkt durch die Ausfräsung bis zur Bohrung vorgeschoben worden ist, in welche er einrastet.

Neben den Vorrichtungen der obengenannten Art sind aus dem Stand der Technik eine Reihe weiterer Vorrichtungen bekannt, die alle die beiden Merkmale aufweisen, dass sie in einer Ausfräsung der Wandplatte vorgeschoben werden und dass ein Bedienknopf zumindest auf der einen Seite der Wandplatte aus dieser - zumeist bündig - herausragt.

Der besagte Bedienknopf nimmt zugleich Zugkräfte auf, die auf die Wandplatte einwirken und diese von der Profilleiste zu trennen versuchen.

Neben dem Werkstoff Metall treten als Wandelemente nun vermehrt auch andere Werkstoffe, wie z.B. Holz, in Erscheinung. Dabei hat sich herausgestellt, dass der bei den bekannten Klemmvorrichtungen in die Wandfläche hineinragende Bedienknopf nicht geeignet ist, grössere Zugkräfte der oben beschriebenen Art aufzunehmen. Die selben Probleme treten bei Bodenplatten oder Tablare/Regalböden auf, die ebenfalls vermehrt aus Holz gefertigt werden.

Ausgehend von dem obengenannten Stand der Technik liegt der Erfindung daher die Aufgabe zugrunde, Vorrichtungen der eingangs genannten Art so auszugestalten, dass sie im Messebau für den häufigen Auf- und Abbau geeignet sind und zugleich auch mit nichtmetallischen Werkstoffen, wie z.B. Holz, eingesetzt werden können.

Diese Aufgabe wird bei einer Vorrichtung der eingangs genannten Art erfindungsgemäss dadurch gelöst, dass der Bedienknopf in der Klemmvorrichtung vorgesehen ist, dass die Verschlusshülse eine den Bedienknopf aufnehmbare Bohrung aufweist, und dass der Bedienknopf in Querrichtung zur Längsachse der Klemmvorrichtung gegen eine Federkraft in den Körper der Klemmvorrichtung einschiebbar ist.

Weitere vorteilhafte Ausgestaltungen der Erfindung sind in den abhängigen Ansprüchen angegeben.

Die Erfindung wird nun nachfolgend beispielhaft anhand der beigefügten Zeichnungen in verschiedenen Ausführungsbeispielen näher erläutert. Es zeigen:
- Fig. 1: eine in eine Wandplatte eingeführte Klemmvorrichtung mit einer erfindungsgemässen Hülse in einer Draufsicht gemäss einem ersten Ausführungsbeispiel,
- Fig. 2: die Wandplatte, Klemmvorrichtung und Hülse nach Fig. 1 in einem Querschnitt entlang der Linie II-II,
- Fig. 3: dieselben Elemente nach Fig. 1 in einem Querschnitt entlang der Linie III-III,
- Fig. 4: eine Draufsicht auf eine Hülse, wie sie im ersten Ausführungsbeispiel nach Fig. 1 bis 3 verwendet wird,
- Fig. 5: eine Seitenansicht der Hülse nach Fig. 4,
- Fig. 6: ein Fig. 3 entsprechender Querschnitt durch Wandplatte, Klemmvorrichtung und Hülse gemäss einem zweiten Ausführungsbeispiel der Erfindung,
- Fig. 7: eine Draufsicht auf eine Hülse gemäss dem zweiten Ausführungsbeispiel,
- Fig. 8: eine Seitenansicht der Hülse nach Fig. 7,
- Fig. 9: ein Fig. 3 entsprechender Querschnitt durch Wandplatte, Klemmvorrichtung und Hülse gemäss einem dritten Ausführungsbeispiel der Erfindung,
- Fig. 10: eine Draufsicht auf eine Hülse gemass dem dritten Ausführungsbeispiel,
- Fig. 11: eine Seitenansicht der Hülse nach Fig. 10,
- Fig. 12: eine Draufsicht auf eine Hülse gemäss einem vierten Ausführungsbeispiel der Erfindung,
- Fig. 13: eine perspektivische Ansicht einer mit einer Hülse gemäss der Erfindung ausgestatteten Wandplatte mit einer profilierten Stange,
- Fig. 14: eine perspektivische Ansicht der Klemmvorrichtung mit Verschlusshülse nach Fig. 1,
- Fig. 15: eine Explosionsansicht von Klemmvorrichtung, Verschlusshülse und Wandplatte nach Fig. 1,
- Fig. 16: ein Fig. 3 entsprechender Querschnitt durch Wandplatte, Klemmvorrichtung und Hülse gemäss einem fünften Ausführungsbeispiel der Erfindung,
- Fig. 17: eine Seitenansicht einer Hülse gemass dem fünften Ausführungsbeispiei,
- Fig. 18: eine Draufsicht auf die Hülse nach Fig. 16,
- Fig. 19: die Klemmvorrichtung mit der erfindungsgemässen Hülse nach Fig. 16 in einer teilweise geschnittenen Draufsicht,
- Fig. 20: ein Fig. 3 entsprechender Querschnitt durch Wandplatte, Klemmvorrichtung und Hülse gemäss einem sechsten Ausführungsbeispiel der Erfindung,
- Fig. 21: eine Seitenansicht einer Hülse gemäss dem sechsten Ausführungsbeispiel,
- Fig. 22: eine Draufsicht auf die Hülse nach Fig. 20,
- Fig. 23: eine Explosionsansicht von Klemmvorrichtung mit einem Verschlussgehäuse, einer dünnen Wandplatte und einer Verschlusshülse gemäss einem siebten Ausführungsbeispiel, und
- Fig. 24: eine Explosionsansicht von Klemmvorrichtung mit einem Verschlussgehäuse, einer dünnen Wandplatte und einer Verschlusshülse gemäss einem achten Ausführungsbeispiel.

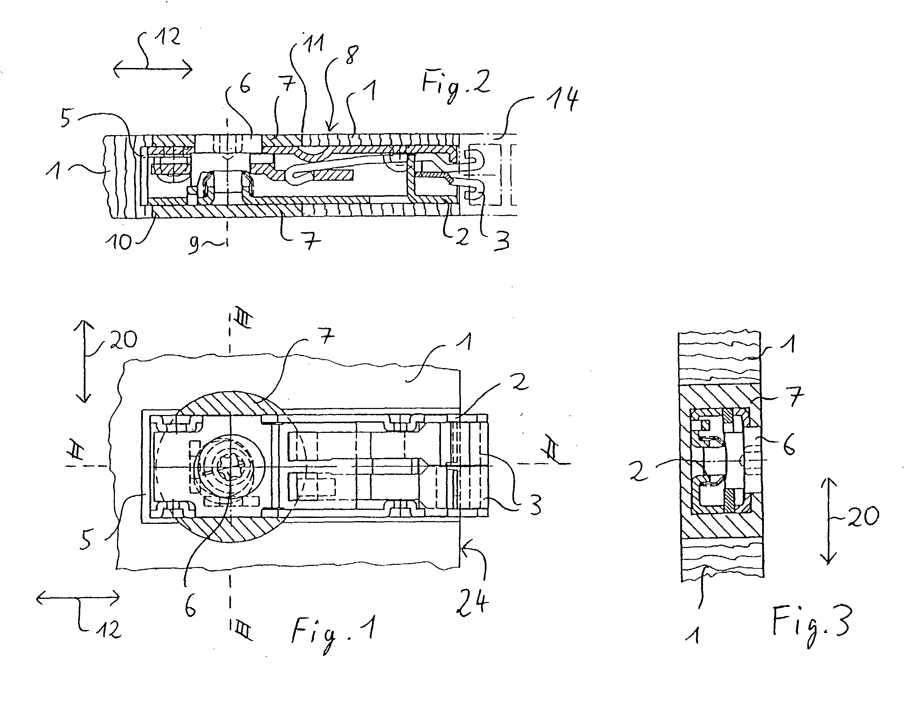

Die Fig. 1 zeigt in einer Draufsicht eine in eine Wandplatte 1 eingeführte Klemmvorrichtung 2, von der lediglich die Klemmhaken 3 über die vordere Wandplattenkante 24 überstehen. Mit dem Bezugszeichen 14 ist eine profilierte Stange bezeichnet, in welcher die Klemmhaken 3 lösbar verhakbar sind. Die Klemmvorrichtung 2 ist in eine mit dem Bezugszeichen 5 gekennzeichnete Ausfräsung in der Wandplatte 1 eingelassen. Der Aufbau der Klemmvorrichtung 2 ist der WO 97/25536 zu entnehmen. Ein wesentliches Merkmal der Klemmvorrichtung 2 ist der Kopf 6, der gegen die Wirkung einer Federkraft in den Korpus der Klemmvorrichtung 2 versenkt und dann durch die Fräsung 5 in die Wandplatte 1 eingeführt wird. Dieser Kopf 6 ragt dann in einer Querbohrung in die Wandplatte 1 hinein, wobei er vorteilhafterweise mit der Wandplatte 1 bündig abschliesst.

Mit dem Bezugszeichen 7 ist die Hülse bezeichnet, deren Funktion im Zusammenhang mit den weiteren Zeichnungen erläutert wird.

Die Fig. 2 zeigt einen Querschnitt entlang der Linie II-II der Fig. 1, wobei jeweils gleiche Merkmale mit den gleichen Bezugszeichen gekennzeichnet sind. Deutlich ist zu erkennen, dass die Klemmvorrichtung 2 in die Ausfräsung 5 vorgeschoben ist und dass der Kopf 6 der Klemmvorrichtung 2 bündig mit der Oberfläche 8 der Wandplatte 1 abschliesst, wobei um die Achse 9 eine zylindrische Bohrung 10 vorgesehen ist, in die vor Einsetzen der Klemmvorrichtung 2 die Hülse 7 einzusetzen ist.

Es ist gut zu erkennen, dass die Hülse 7 in dem Bereich der Wandplatte 1 in dieser formschlüssig sitzt und insbesondere in den mit 11 gekennzeichneten Bereichen Kräfte aufzunehmen vermag, die in einer der Richtungen des Doppelpfeiles 12 wirken.

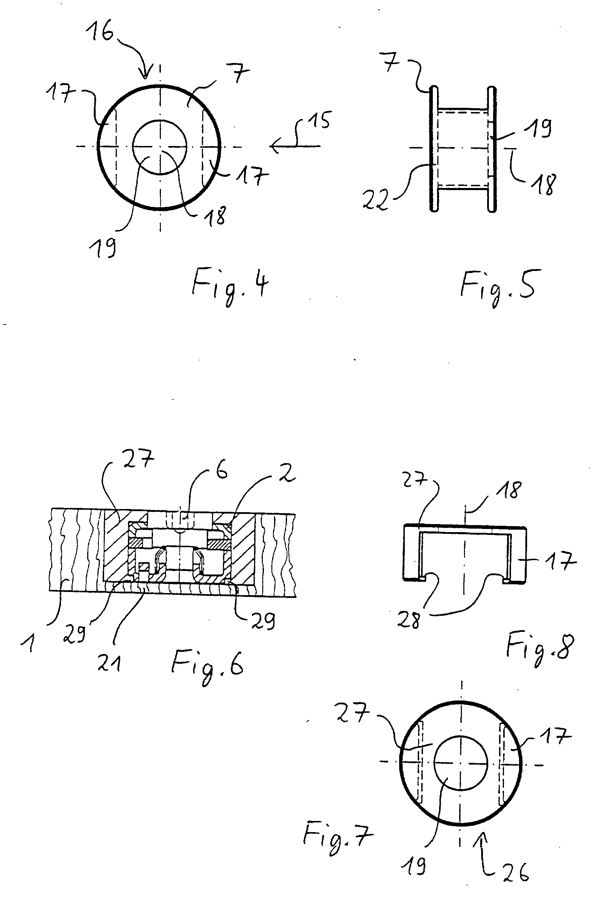

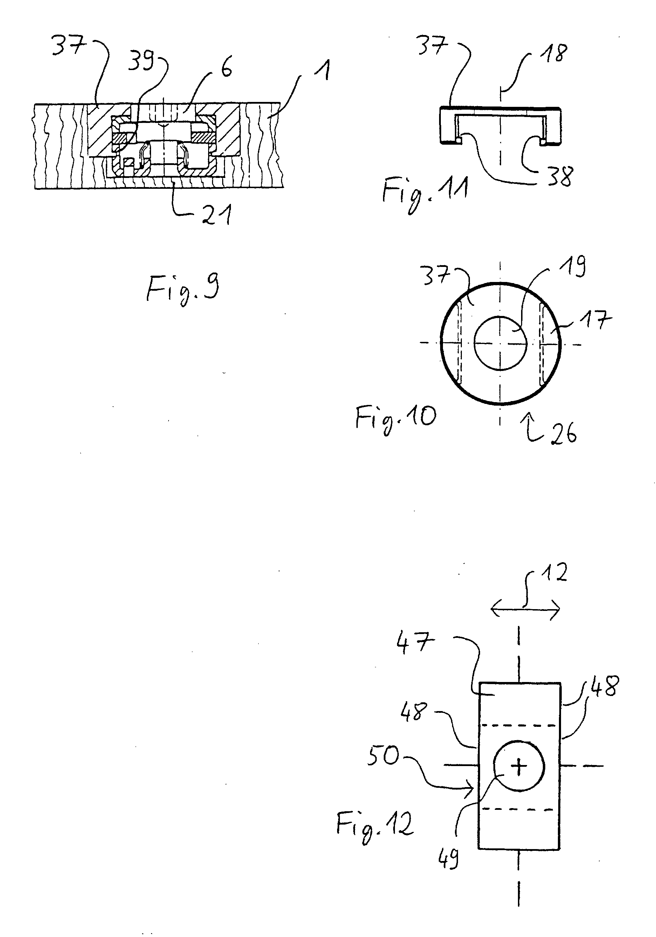

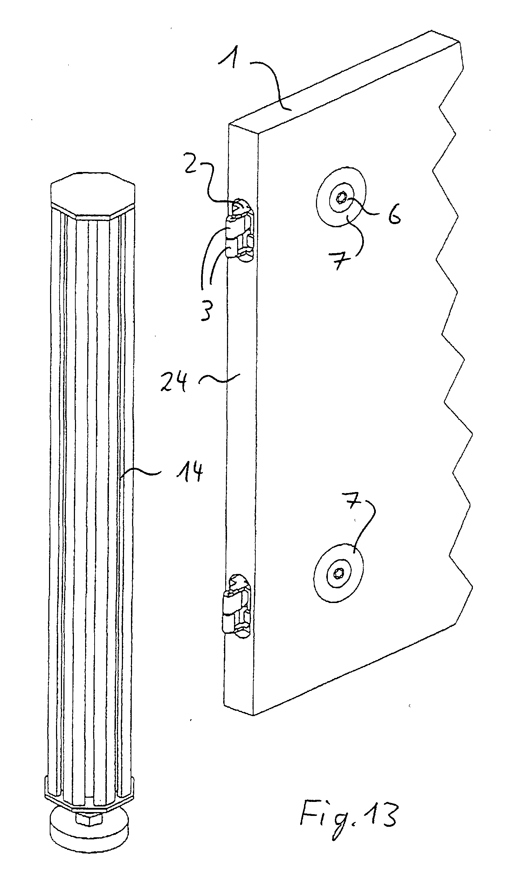

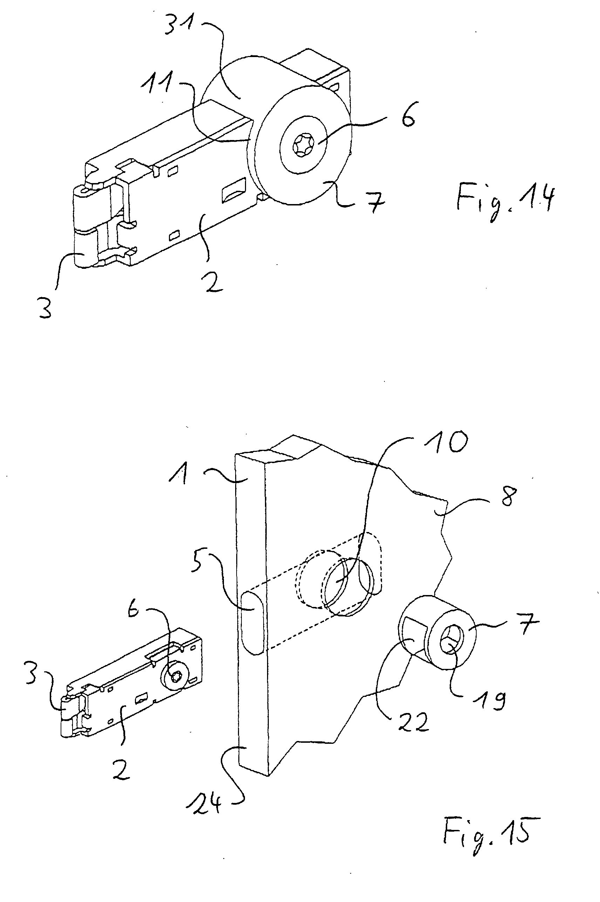

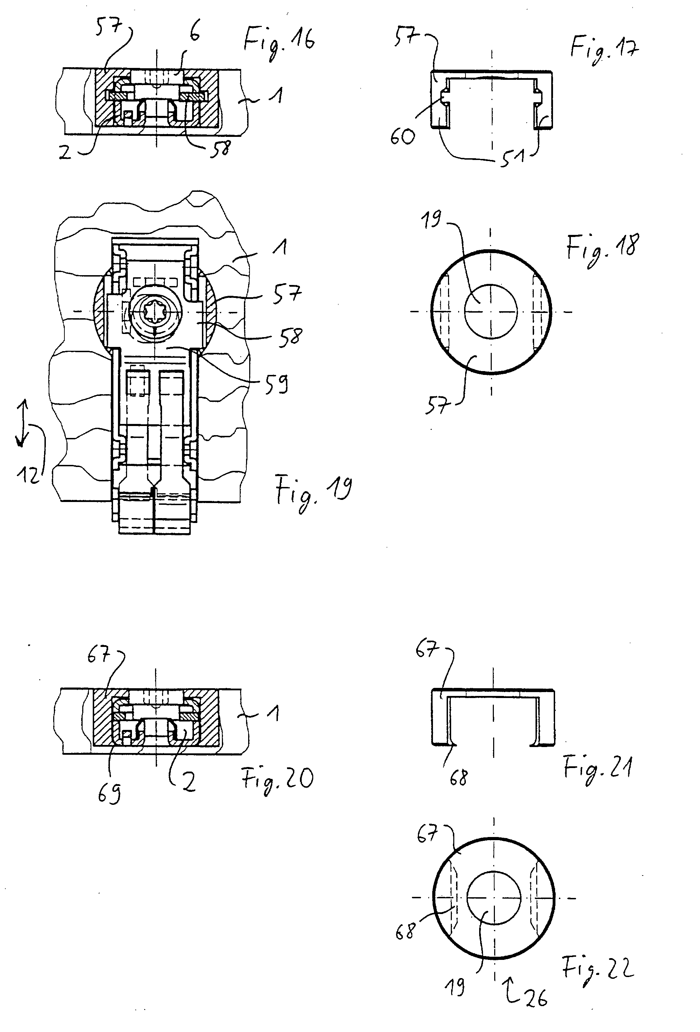

In der Fig. 3 ist ein Querschnitt entlang der Linie III-III aus der Fig. 1 dargestellt. Die Fig. 4 zeigt die Hülse 7 in einer Draufsicht. Zugehörig ist die Fig. 5, die dieselbe Hülse 7 in der Seitenansicht aus der Richtung 15 zeigt. Es ist deutlich zu erkennen, dass die zylindrische Hülse 7 über eine sie durchstossende, hier rechteckige Bohrung 16 verfügt, die an beiden Seiten jeweils in der Draufsicht einen Kreisabschnitt 17 an Material stehenlässt. Durch die Bohrung 16 ist der Körper der Klemmvorrichtung 2 vorschiebbar. Konzentrisch zur Symmetrieachse 18 des Zylinders der Hülse 7 ist eine Aufnahmebohrung 19 vorgesehen, deren Durchmesser so angepasst ist, dass der Kopf 6 der Klemmvorrichtung 2 im wesentlichen formschlussig hineinpasst.

Aus der Darstellung der Hülse 7 wird deren Wirkungsweise im Zusammenhang mit den Fig. 1 bis 3 sofort klar. Die Kraftaufnahme in einer der Richtungen des Doppelpfeiles 20 in der Fig. 1 oder 3 wird durch die grossen Seitenflächen der Klemmvorrichtung 2 gewährleistet. Diese Krafteinwirkung entspricht zumeist dem Gewicht der Wandplatten 1, die über die Klemmvorrichtung 2 an profilierten Stangen 14 befestigt werden. Neben den Wandplatten 1 kann die erfindungsgemässe Hülse zu einer Klemmvorrichtung ebenfalls bei Tablaren/Regalböden und Bodenplatten oder anderen zu tragenden flächenhaften Elementen zur Anwendung kommen, und hier insbesondere im Messebau.

Durch den Einsatz der Hülse 7 ist die Fläche stark vergrössert, über welche Kräfte aufgenommen werden können, die in einer der Richtungen des Doppelpfeiles 12 wirken, d.h. im wesentlichen Zugkräfte, die die Wandplatte 1 von der profilierten Stange entfernen könnten, in die die Klemmhaken 3 der Klemmvorrichtung 2 eingreifen. Die auf Zug beanspruchte Flache der Hülse 7 entspricht in der Projektion in der Fig. 4 der Fläche, die in der Ebene des Pfeiles 15 angeordnet ist. Diese hat sich somit bei der im Ausführungsbeispiel gewählten Auslegung mehr als verdoppelt. Neben dieser Fläche, die in Fig. 14 durch das Bezugszeichen 11 gekennzeichnet ist, treten ebenfalls und insbesondere die mit dem Bezugszeichen 31 gekennzeichneten Flächenbereiche der Kreissegmentabschnitte 17 im Mantel hinzu. Gleichzeitig bildet die Grundfläche 22 der Hülse 7 ein Widerlager, welches ein Verkippen von dem Kopf 6 in der Hülse 7 bzw. von der Hülse 7 bezüglich der Wandplatte 1 sicher verhindert.

Natürlich ist die Wirkung der Hülse ebenfalls mit anders ausgestalteten Klemmvorrichtungen oder Hülsen realisierbar. Insbesondere kann es wünschenswert sein, dass, wie beim zweiten Ausführungsbeispiel in der Fig. 6 dargestellt, die Wandplatte 1 einen Bodenabschnitt 21 beibehält, so dass die Hülse 27 nur von der Oberseite, d.h. nur von einer Seite, in der Wandplatte zu erkennen ist. Wie aus den Fig. 7 und 8 bei der Darstellung der Hülse 27 zu erkennen ist, verfügt diese mit ihrer Ausnehmung 26 nun nicht mehr über eine Bodenplatte 22, sondern über zwei längliche Hinterschneidungen 28, die in entsprechend in der Klemmvorrichtung 2 vorgesehene Nuten 29 eingreifen.

Die Fig. 9 zeigt ein drittes Ausführungsbeispiel der Erfindung, bei dem die Höhe der hier vorgesehenen Hülse 37 noch einmal verringert worden ist, so dass die Hinterschneidungen 38 in ungefähr halber Höhe der Klemmvorrichtung 2 in eine entsprechend vorgesehene Rille 39 von dieser eingreifen. Die Bohrung ist auch hier zu einer U-förmigen Ausnehmung 26 umgebildet. Hier ist in den Fig. 10 und 11 zu erkennen, dass die Vergrösserung der Wirkfläche auch mit einer sehr geringen Bauhöhe der Hülse gewährleistbar ist.

Neben den hier dargestellten Ausführungsbeispielen ist es naturlich ebenso möglich, die Hülse 7 nicht zylindrisch, sondern ekkig, insbesondere rechtwinklig, auszugestalten. Neben einem Rechteck können für die äussere Form der Hülse auch andere Vielecke gewählt werden. Die Fig. 12 gibt eine entsprechende Skizze in der Draufsicht wider. Diese Hülse 47 kann entsprechend den zuerst genannten Ausführungsbeispielen verschiedene Höhen haben, durch die Platte 1 vollständig hindurchtreten oder Hinterschneidungen aufweisen. Wichtig ist in jedem Fall, dass eine vordere Kantenfläche 48 besteht, deren senkrecht zur Pfeilrichtung 12 liegende Oberfläche grösser als der Durchmesser der Bohrung 49 ist, durch die der Kopf 6 der Klemmvorrichtung 2 hindurchragt. Mit dem Bezugszeichen 50 ist die in der Hülse 47 für die Klemmvorrichtung 2 vorgesehene Bohrung bezeichnet. Der Einsatz der Hülse 47 erfordert natürlich das Vorsehen einer entsprechend rechtwinklig ausgebohrten Öffnung in der Wandplatte 1. Vorteilhafterweise bestehen neben der Bohrung 50 seitliche Wülste, hier die seitlichen Bereiche 48, die die aus einem Profilstück 1 stammenden Zugkraft aufnehmen und über den Bedienknopf 6 in die Klemmvorrichtung 2 und dann in die profilierte Stange 14 einleiten.

Natürlich sind auch andere Formen des Kopfes 6, wie eine Wabenstruktur oder ein Oktagon möglich. Insbesondere kann die Bohrung 49 für den Kopf 6 an die Erfordernisse dieses eventuell eine andere äussere Form aufweisenden Kopfes 6 angepasst werden, wobei zur Fixierung der Klemmvorrichtung 2 und der Klemmhaken 3 in einer profilierten Stange 1 natürlich die Kreisform des Kopfes 6 bevorzugt ist, da diese somit einfach zu drehen ist.

Die Fig. 13 zeigt eine perspektivische Ansicht einer mit einer Hülse 7 gemäss der Erfindung ausgestatteten Klemmvorrichtung 2, die in einer Wandplatte 1 eingeschoben ist, vor einer profilierten Stange 14. Dabei ruht nach dem Zusammenbau die Vorderseite 24 der Platte 1 auf der profilierten Stange 14.

Die Fig. 14 zeigt eine perspektivische Ansicht der Klemmvorrichtung 2 mit Verschlusshülse 7 nach Fig. 1 bzw. 13 in zusammengesetztem Zustand. Insbesondere können die Bereiche 11 und 31 erkannt werden, die seitlich über die Klemmvorrichtung 2 hinausstehen und damit nach dem Einbau in dem Material der Wandplatte 1 ruhen und zur Kraftaufnahme geeignet sind.

Die Fig. 15 zeigt eine Explosionsansicht von Klemmvorrichtung 2, Verschlusshülse 7 und Wandplatte 1 nach Fig. 1 vor dem Zusammenbau. Dabei sind die durchgehende Bohrung 10 und die Ausfräsung 5 zu erkennen, in die in dieser Reihenfolge die Verschlusshülse 7 und die Klemmvorrichtung 2 eingesetzt werden. Dabei ist festzustellen, dass die Erfindung mit jeglicher Klemmvorrichtung eingesetzt werden kann, die wie die Klemmvorrichtung 2 eine Quaderform hat. Die Klemmvorrichtung kann aber beispielsweise auch einen zylinderförmigen Körper aufweisen.

Die Fig. 16 zeigt einen Fig. 3 entsprechenden Querschnitt durch Wandplatte 1, Klemmvorrichtung 2 und einer Hülse 57 gemäss einem fünften Ausführungsbeispiel der Erfindung. Hier verfügt die Klemmvorrichtung 2 seitlich jeweils über über den Aussenrand des Gehäuses der Klemmvorrichtung 2 überscehende Abschnitte 58, die besser in der teilweise geschnittenen Draufsicht auf die Klemmvorrichtung 2 nach der Fig. 19 zu erkennen sind. Diese Abschnitte 58 sind Bestandteil des längsbeweglichen Schiebers 59.

Die Fig. 17 zeigt eine Seitenansicht der Hülse 57 und die Fig. 18 eine Draufsicht auf diese Hülse 57. Dabei ist zu erkennen, dass seitlich in entsprechender Höhe und komplementär zu den Abschnitten 58 Längsnuten 60 vorgesehen sind, die die Funktion der Hinterschneidungen 28 bzw. 38 erfüllen. Vorzugsweise ist die Höhe der Hülse 57 damit genauso hoch wie die Höhe der Klemmvorrichtung 2 mit Kopf 6. In der Seitenansicht der Fig. 17 ist die in Ein- bzw. Auszugsrichtung 12 gerichtete Fläche mit dem Bezugszeichen 51 versehen.

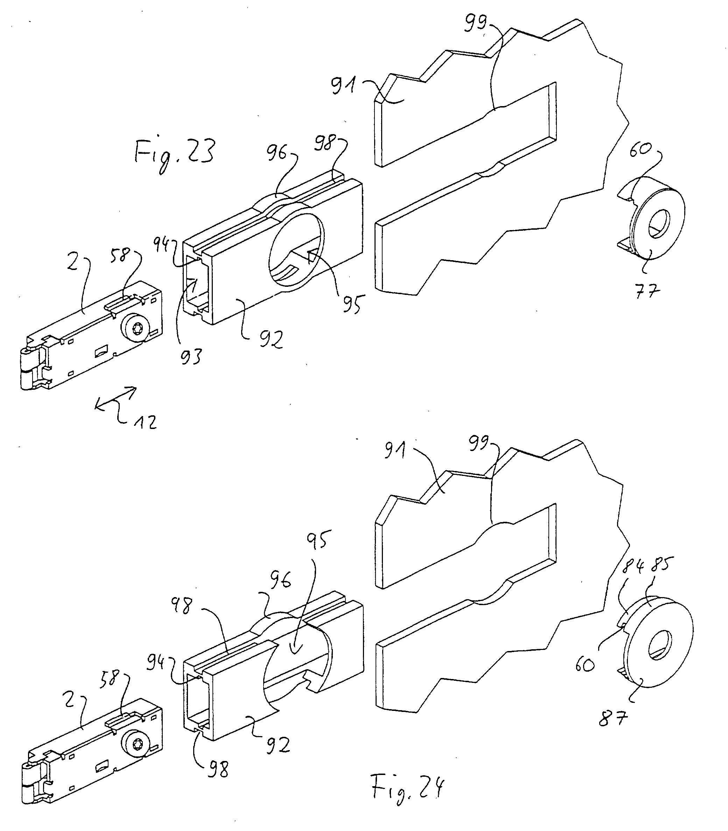

Die Fig. 20 zeigt einen der Fig. 3 entsprechenden Querschnitt durch Wandplatte 1, Klemmvorrichtung 2 und Hülse 67 gemäss einem sechsten Ausführungsbeispiel der Erfindung, wobei Fig. 21 eine Seitenansicht und Fig. 22 eine Draufsicht auf die Hülse 67 nach Fig. 20 darstellt. Hier weist die Klemmvorrichtung 2 abgerundete Seitenkanten und insbesondere abgerundete untere Seitenkanten 69 auf. Diese wirken zusammen mit Hinterschneidungen 68 der Hülse 67, die denselben komplementären Krümmungsradius aufweisen.

Die Fig. 23 zeigt eine Explosionsansicht von einer Klemmvorrichtung 2 mit einem Verschlussgehäuse 92, einer dünnen Wandplatte 91 und einer Verschlusshülse 77 gemäss einem siebten Ausführungsbeispiel. Die Hülse 77 ist wie die Hülse 57 mit einer Nut 60 versehen, die mit überstehenden Elementen 58 der Klemmvorrichtung 2 zusammenwirken. Um die Klemmvorrichtung 2 auch bei Wandplatten 91 einsetzen zu können, die dünner als die Klemmvorrichtung 2 selber sind, ist ein Verschlussgehäuse 92 vorgesehen, welches einen durchgehenden Hohlraum 93 mit Nuten 94 für die Elemente 58 aufweist. Ferner ist eine quer zur Richtung 12 angeordnete Öffnung 95 zur Aufnahme der Hülse 77 vorgesehen. Dabei stehen Zylinderabschnitte 96 über die Aussenwände des Verschlussgehäuses 92 über. Zur Aufnahme der dünnen Wandplatte 91 ist auf den gegenüberliegenden Seiten des Verschlussgehäuses 92 jeweils eine längs verlaufende Nut 98 vorgesehen, deren komplementäre Form in der Wandplatte 91 ausgenommen ist. Dabei können die Masse des Verschlussgahäuses 92 in einer andere Ausführungsform auch so gewählt werden, dass auf die kreisabschnittförmige Ausnehmung 99 in der Wandplatte 91 verzichtet wird.

Die Fig. 24 schliesslich zeigt eine Explosionsansicht von einer Klemmvorrichtung 2 mit einem weiteren Verschlussgehäuse 92, einer dünnen Wandplatte 91 und einer Verschlusshülse 87 gemäss einem achten Ausführungsbeispiel. Dieses Ausführungsbeispiel ist sehr ähnlich zu dem aus der Fig. 23. Die Unterschiede liegen darin, dass die Hülse 87 über zwei Abschnitte 84 und 85 mit unterschiedlichen Kreisdurchmessern verfügt. Der hinter oder untere Abschnitt 84 ist kleiner und bildet einen Teil der Oberfläche der Nut 98. Der obere grössere Abschnitt 85 nimmt einen Platz im Verschlussgehäuse 92 ein, der in dem Verschlussgehäuse 92 nach Fig. 23 von diesem selbst ausgefüllt worden ist. Damit ist eine platzsparende Bauweise der Klemmvorrichtung 2 mit der Hülse 87 für die dünne Wandplatte 91 möglich.

Die zum Einsatz mit dem Verschlussgehäuse 92 vorgesehenen Hülsen 77 und 87 können natürlich auch entsprechend anderen Ausführungsformen und insbesondere gemäss den Hülsen 7, 27, 37, 47, 57 und 67 ausgestaltet sein. Dann kann insbesondere auch auf die Nut 94 verzichtet werden, wenn die Klemmvorrichtung 2 uber keine überstehenden Abschnitte 58 verfügt.

Die Hülsen 7, 27, 37, 47, 57, 67, 77 und 87 sowie die Verschlusshülse 92 bestehen vorzugsweise aus einem Leichtmetall, z.B. Aluminium. Sie können aber auch aus jedem anderen Material gefertigt sein, insbesondere aus Kunststoff. Zusammenfassend weisen diese Hülsen den Vorteil auf, dass mit einer solchen Verschlusshülse 7, 27, 37, 47, 57, 67, 77 und 87 ausgestattete Klemmeinrichtungen 2 erheblich besser in Längsrichtung 12 der Klemmeinrichtung 2 wirkenden Zugkräften widerstehen. Damit sind Klemmvorrichtungen 2 der besagten Art nun auch bei anderen Materialien der Profilstücke 1, z.B. Holz, einsetzbar. Durch Einsatz einer Verschlusshülse 92 können nun auch sehr dünne Profilelemente 1, wie beispielsweise dünne Holzplatten 91, zum Einsatz kommen.

## Patentansprüche

1. Vorrichtung zum lösbaren Verbinden zweier Profilstücke (1, 91 und 14) mit einer Klemmvorrichtung (2), die in eine in einem Profilstück (1, 91) vorgesehene Öffnung (5) einführbar ist, mit einer Verschlusshülse (7, 27, 37, 47, 57, 67, 77, 87), die zur formschlüssigen Aufnahme des Körpers der Klemmvorrichtung (2) über eine Ausnehmung (16, 50) verfügt, und mit einem Bedienknopf, mit dem die Klemmvorrichtung (2) in der Verschlusshülse (7, 27, 37, 47, 57, 67, 77, 87) arretierbar ist, **dadurch gekennzeichnet, dass** der Bedienknopf (6) in der Klemmvorrichtung (2) vorgesehen ist, dass die Verschlusshülse (7, 27, 37, 47, 57, 67, 77, 87) eine den Bedienknopf (6) aufnehmbare Bohrung (19) aufweist, und dass der Bedienknopf (6) in Querrichtung zur Längsachse der Klemmvorrichtung (2) gegen eine Federkraft in den Körper der Klemmvorrichtung (2) einschiebbar ist.

2. Vorrichtung nach Anspruch 1, **dadurch gekennzeichnet, dass** die Aussenform der Verschlusshülse (7, 27, 37, 57, 67) ein Zylinder ist.

3. Vorrichtung nach Anspruch 1, **dadurch gekennzeichnet, dass** die Aussenform der Verschlusshülse (47) ein Vieleck ist.

4. Vorrichtung nach einem der Ansprüche 1 bis 3, dadurch gekenn-zeichnet, dass die Ausnehmung (16, 50) eine Bohrung ist, so dass die Verschlusshülse (7) über einen der Bohrung (19) gegenüberliegenden Boden (22) verfügt.

5. Vorrichtung nach einem der Ansprüche 1 bis 3, **dadurch gekennzeichnet, dass** die Ausnehmung (26) so ausgestaltet ist, dass von der Verschlusshülse (27, 37, 67) ein im Querschnitt U-förmiger Teil verbleibt; und dass die Verschlusshülse (27, 37, 67) Hinterschneidungen (28, 38, 68) aufweist, die mit komplementären Nuten (29, 39, 69) der Klemmvorrichtung (2) zusammenwirken.

6. Vorrichtung nach einem der Ansprüche 1 bis 3, **dadurch gekennzeichnet, dass** die Verschlusshülse (57, 77, 87) über seitlich in Einführungsrichtung (12) verlaufende Nuten (60) verfügt, die mit komplementären Abschnitten (58) der Klemmvorrichtung (2) zusammenwirken.

7. Verschlussgehäuse für eine Vorrichtung nach einem der vorstehenden Ansprüche, **dadurch gekennzeichnet, dass** das Verschlussgehäuse (92) einen Hohlraum (93) zur Aufnahme der Klemmvorrichtung (2), eine quer zu deren Längsrichtung ausgerichtete Öffnung (95) zur Aufnahme der Verschlusshülse (77, 87) und an seinen Schmalseiten in Längsrichtung verlaufende Nuten (98) zur Aufnahme des Profilstückes (91) aufweist.

8. Verschlussgehäuse nach Anspruch 7, **dadurch gekennzeichnet, dass** es an seinen Schmalseiten über überstehende Zylinderabschnitte (96) verfügt, die mit komplementären Ausnehmungen (99) des Profilstückes (91) zusammenwirken.

9. Verschlussgehäuse nach Anspruch 7, **dadurch gekennzeichnet, dass** der Hohlraum (93) an den Schmalseiten über einander gegenüberliegende Nuten (94) zur Aufnahme für seitlich über die Klemmvorrichtung (2) überstehende Abschnitte (58) verfügt.

## Claims

1. Device for the releasable connection of two profile pieces (1, 91 and 14), having a clamping device (2) which can be introduced into an opening (5) provided in a profile piece (1, 91), having a closure sleeve (7, 27, 37, 47, 57, 67, 77, 87) which, for receiving the body of the clamping device (2) in a form-fitting manner, has a recess (16, 50), and having an operating knob by means of which the clamping device (2) can be secured in the closure sleeve (7, 27, 37, 47, 57, 67, 77, 87), **characterised in that** the operating knob (6) is provided in the clamping device (2), **in that** the closure sleeve (7, 27, 37, 47, 57, 67, 77, 87) has a bore (19) which receives the operating knob (6), and **in that** the operating knob (6) can be pushed into the body of the clamping device (2), counter to a spring force, in the transverse direction to the longitudinal axis of the clamping device (2).

2. Device according to claim 1, **characterised in that** the closure sleeve (7, 27, 37, 57, 67) has the outer form of a cylinder.

3. Device according to claim 1, **characterised in that** the closure sleeve (47) has the outer form of a polygon.

4. Device according to one of claims 1 to 3, **characterised in that** the recess (16, 50) is a bore, with the result that the closure sleeve (7) has a base (22) located opposite the bore (19).

5. Device according to one of claims 1 to 3, **characterised in that** the recess (26) is configured such that, of the closure sleeve (27, 37, 67), a cross-sectionally U-shaped part remains, and **in that** the closure sleeve (27, 37, 67) has undercuts (28, 38, 68) which interact with complementary grooves (29, 39, 69) of the clamping device (2).

6. Device according to one of claims 1 to 3, **characterised in that** the closure sleeve (57, 77, 87) has grooves (60) which run laterally in the introduction direction (12) and interact with complementary sections (58) of the clamping device (2).

7. Closure housing for a device according to one of the preceding claims, **characterised in that** the closure housing (92) has a cavity (93), for receiving the clamping device (2), an opening (95), which is aligned transversely to the longitudinal direction of said clamping device and is intended for receiving the closure sleeve (77, 87), and grooves (98), which run in the longitudinal direction on the narrow sides of the closure housing and are intended for receiving the profile pieces (91).

8. Closure housing according to claim 7, **characterised in that**, on its narrow sides, it has projecting cylinder sections (96) which interact with complementary recesses (99) of the profile piece (91).

9. Closure housing according to claim 7, **characterised in that**, on the narrow sides, the cavity (93) has mutually opposite grooves (94) for receiving sections (58) which project laterally beyond the clamping device (2).

## Revendications

1. Dispositif pour assembler de façon libérable deux pièces profilées (1, 91 et 14) avec un dispositif de serrage (2) qui peut être inséré dans une ouverture (5) prévue dans une pièce profilée (1, 91), avec une douille de fermeture (7, 27, 37, 47, 57, 67, 77, 87) qui comprend une cavité (16, 50) pour recevoir le corps du dispositif de serrage (2) à engagement positif, et avec un bouton de commande avec lequel le dispositif de serrage (2) peut être sécurisé dans la douille de fermeture (7, 27, 37, 47, 57, 67, 77, 87), **caractérisé en ce que** le bouton de commande (6) est prévu dans le dispositif de serrage (2), **en ce que** la douille de fermeture (7, 27, 37, 47, 57, 67, 77, 87) comprend un alésage (19) qui reçoit le bouton de commande (6), et **en ce que** le bouton de commande (6) peut être, à l'encontre d'un effet de ressort, poussé dans le corps du dispositif de serrage (2) dans la direction transversale par rapport à l'axe longitudinal du dispositif de serrage (2).

2. Dispositif selon la revendication 1, **caractérisé en ce que** la douille de fermeture (7, 27, 37, 57, 67) a une forme extérieure cylindrique.

3. Dispositif selon la revendication 1, **caractérisé en ce que** la douille de fermeture (47) a une forme extérieure polygonale.

4. Dispositif selon l'une des revendications 1 à 3, **caractérisé en ce que** la cavité (16, 50) est un alésage résultant **en ce que** la douille de fermeture (7) a un fond (22) localisé diamétralement opposé à l'alésage (19).

5. Dispositif selon l'une des revendications 1 à 3, **caractérisé en ce que** la cavité (26) est configurée de telle manière que, de la douille de fermeture (27, 37, 67), une partie en forme de U subsiste dans une vue de coupe transversale, et **en ce que** la douille de fermeture (27, 37, 67) a des contre-dépouilles (28, 38, 68) qui engagent des rainures complémentaires (29, 39, 69) du dispositif de serrage (2).

6. Dispositif selon l'une des revendications 1 à 3, **caractérisé en ce que** la douille de fermeture (57, 77, 87) a des rainures (60) qui s'étendent latéralement dans la direction d'introduction (12) et engagent des sections complémentaires (58) du dispositif de serrage (2).

7. Boîtier de fermeture pour un dispositif suivant l'une des revendications précédentes, **caractérisé en ce que** le boîtier de fermeture (92) comprend une cavité (93) pour recevoir le dispositif de serrage (2), une ouverture (95) qui est alignée transversalement par rapport à la direction longitudinale dudit dispositif de serrage et est prévue pour recevoir la douille de fermeture (77, 87), et des rainures (98) qui s'étendent dans la direction longitudinale sur les côtés étroits du boîtier de fermeture et qui sont prévues pour recevoir les pièces profilées (91).

8. Boîtier de fermeture selon la revendication 7, **caractérisé en ce que** sur ses cotés étroites, il comprend des sections cylindriques (96) protubérantes qui engagent les cavités complémentaires (99) de la pièce profilée (91).

9. Boîtier de fermeture selon la revendication 7, **caractérisé en ce que** sur ses côtés étroits, la cavité (93) comprend des rainures (94) mutuellement opposées pour recevoir des sections (58) qui s'étendent latéralement au delà du dispositif de serrage (2).
